Europäisches Patentamt

European Patent Office

Office européen des brevets

(11) Publication number: **0 349 688**
A2

## (12) EUROPEAN PATENT APPLICATION

(21) Application number: 88306181.4

(51) Int. Cl.⁴: **B29C 65/34**

(22) Date of filing: 07.07.88

(43) Date of publication of application:
10.01.90 Bulletin 90/02

(84) Designated Contracting States:
BE DE ES FR IT SE

(71) Applicant: **CARADON ROLINX LIMITED**
**Ledson Road Baguley**
**Wythenshawe Manchester, M23 9WP(GB)**

(72) Inventor: **Hancock, Frank John Thompson**
**Heath Lodge Elm Grove**
**Alderley Edge Cheshire(GB)**

(74) Representative: **Rushton, Ronald et al**
**SOMMERVILLE & RUSHTON 11 Holywell Hill**
**St. Albans Hertfordshire AL1 1EZ(GB)**

(54) **Welding process.**

(57) A car bumper is assembled by welding together a channel-shaped facing component (4) and a rigid backing component (15), of mutually compatible thermoplastics, using sacrificial heating elements (17) to soften the surface portions to be welded while the components are held in jigs. Once these portions have been softened, but not until then, pressure is applied to force the softened portions together, by means of movable members (9,10) co-extensive with the seams and moved by inflation of resilient tubes (11,12) carried in recesses in the jig (5) which supports the facing component. After the weld surfaces have thus become fused, they are allowed to cool.

EP 0 349 688 A2

## WELDING PROCESS

The invention relates to thermoplastic materials and in particular to the welding together of components preformed from compatible thermoplastic materials.

A common method of welding compatible thermoplastic materials is to heat them until they soften and fuse together, and then allowing the fused material to cool and harden. By "compatible" in this context we mean that when they are brought together in a sufficiently softened state they will mix freely to form an integrated whole. Such methods are particularly applicable to the welding of two components formed from the same thermoplastic materials, but can be applied to a variety of similar materials also.

Where large areas or long strips are to be welded, an effective known method of carrying out such welding is to insert between the components a porous electrical heating element covering substantially the area to be welded, applying a pressure to bias the components towards each other, heating the electrical element to soften the adjacent surfaces of the thermoplastic materials, and as these soften, to fuse the softened materials together through the porous heating element as the components move together under the biasing pressure, thereafter cooling to solidify the fused material and form the weld. Suitable electrical heating elements include loosely woven or braded tapes, which for many applications are preferably woven or braded from a mixture of both electrically conducting wires and filaments of thermoplastic materials which are compatible with those being welded. The heating elements used in such methods are sacrificial, being retained within the weld on completion.

Such methods have previously been used very effectively to produce strong and uniform welds, even over substantial lengths. Thus for example, the pre-moulded hull and deck components of a topper sailing dinghy are joined by a continuous weld about 8 m long, extending right around the gunwhale. While the sacrificial tape is being heated, the two components are biased together by pneumatic pressure applied over the full length to give a uniform bias, and we have found in practice that this produces a strong, continuous and water tight joint right around the boat. However, we have now found that a reason for such success lies in the flexibility of the component against which the pneumatic pressure is applied, for, when applying the same technique to rigid components or to flexible components held rigid for cosmetic or other reasons, the resultant welds tend to be faulty. Such faults may take the form of intermittent dry areas along the weld line where the thermoplastic materials of the two components have not fused together, or even of a substantial length at one end of the intended weld line remaining dry. We have also found that this problem could be largely overcome by using higher heating currents to obtain higher temperatures, but with some materials this introduced further problems through degradation of the thermoplastic material.

According to a first aspect of the present invention, we now provide a method of welding together components formed of compatible thermoplastics materials where the components are rigid or are required to be held rigid during welding, the method comprising inserting between the components a porous electrical heating element covering substantially the area to be welded, applying a pressure to bias the components towards each other, heating the electrical element to soften the adjacent surface of the thermoplastic materials for fusing the softened materials together through the porous heating element as the components move together under the biasing pressure, and thereafter cooling to solidify the fused material and form a weld, characterised in that the pressure to bias the components towards each other is first applied after the surfaces of the components have been softened sufficiently for the materials to be capable of fusing together under the biasing pressure, and that if any initial pressure should be applied to support the components while the materials are being softened, any such initial pressure shall be insufficient to produce any substantial movement of the components towards each other as their surfaces soften.

By applying the biasing pressure after the surfaces have been softened, we have found that we can produce between rigid components, welds which are as uniform and as strong as those we had previously produced in more flexible components, using equivalent heating currents and hence presumable equivalent temperatures. We have also found that a suitable biasing pressure is of the same size as that which would have been suitable for the more flexible components, the actual numerical optimum values of the temperature and biasing pressure then being determinable in known manner according to the parameters of the occasion, e.g. the thermoplastic materials being welded the thickness of the components, the proposed weld dimensions and the nature of the heating element.

The materials can be cooled by applying specific cooling means, e.g. water cooling of the apparatus, but in most cases we have found that the materials can be cooled sufficiently quickly merely by ceasing to heat them with the heating element and leaving natural conductors and convention remove the heat.

We prefer to use pneumatic or hydraulic means for producing the second biasing pressure, so as to apply the pressure uniformly over substantially the whole area of the weld, i.e. in the manner which had previously been used for welding more flexible components, but with the application of the biasing pressure delayed until the materials have been softened in accordance with the present method. However, as the rigidity becomes more absolute, the advantages of such uniform application of pressure becomes less significant. For a particularly rigid component, the pneumatic or hydraulic pressure may be applied by placing the welding surfaces of the two components together with a rigid support on one side and an inflatable biasing tube on the other, the support and inflatable tube being positioned along the weld line, but of course lying against the outward facing surfaces. This is essentially the arrangement used previously for welding flexible components, but the reason that this arrangement was then successful with biasing pressures applied ab initio and throughout the softening period (in direct contrast to the effect with rigid or held rigid components), we now believe to be due to the component flexibility on the inflatable tube side enabling it to distort slightly, and it appears to be this distortion which gave the very sound and uniform welds found, for example, on the Topper. However, while the surface adjacent the rigid support retained a flat configuration, that adjacent the inflatble tube tended to form dimple-like undulations. These distortions could be unsightly, so such known methods were really only suitable where the inflatable tube could be placed against a surface that would not normally be exposed. As will be appreciated, this was not always possible, especially where one edge of the hidden component had to be welded to a surface of the other, thereby preventing the location of an inflatable tube on the hidden side of the weld.

We have now found that we can largely overcome such problems with flexible exposed sheet components, by holding them rigid during the application of biasing pressure, and using the present method. We achieve this by applying the biasing pressure to the exposed surface of the flexible component through a mouldable rigid member lying between the source of the biasing pressure and the surface to which the pressure is being applied. The rigid member has to be moveable in the direction of the appl;ied bias so that the latter can be maintained while the two components move together as the softened materials flow through the heating element. The moveable member, being rigid, holds the surface of the component rigid as it is pressed against that surface, thereby avoiding the formation of indulations no matter how the biasing pressures are provided nor how evenly they are applied to the moveable rigid member. As may be appreciated, when held rigid by a moveable rigid member in this way, the flexible component behaves in a manner similar to that of a rigid component, and so would tend to suffer the same problems if uneven welding of the welding operations were carried out while exerting a single constant biasing pressure continuously through-out the heating cycle in the previously known manner.

A design of car bumper which is becoming increasingly popular, is one formed from components moulded from thermoplastics materials, and comprising a facing component welded onto a concealed backing component to provide it with strength and rigidity. Various welding methods have been used, and we considered using the previously known use of sacrificial heating elements and sustained pressures applied during heating. However, because of the configuration of the assembly in which an edge of the backing component has to be welded to the concealed reverse face of the facing component, an inflatable tube could not be placed against a concealed surface of the backing component for applying the biasing pressure. Instead it was necessary to support the backing component and to apply the biasing pressure against the exposed surface of the facing component. However, although such bumpers are necessarily stiff, we found that application of the pneumatic pressure to the exposed surface of the bumper through the welding process in known manner, tended to form unsightly undulations in the exposed surface.

However, by combining the use of a rigid member for applying the pressure, and delaying application of the biasing pressure, the present method provides a reliable method for contructing a car bumper from a thermoplastic backing component and a thermoplastic facing component having an exposed surface and a concealed surface, by welding the backing component to the concealed surface of the facing component, the method comprising supporting the facing component in a position with respect to the backing component such that the two surfaces to be welded are adjacent to each other with a porous heating element therebetween, placing a movable rigid member against the exposed surface of the facing component so as to lie along and correspond in shape to that exposed surface along the line of the weld to be formed on its concealed surface, raising the temperature of the heating element to soften the adjacent surfaces of the thermoplastic components, and when the surfaces are sufficiently soft to fuse together, applying a biasing pressure to the moveable rigid member so as to move the facing component towards the backing component and thereby to cause the softened materials to fuse together through the heating element, thereafter cooling the materials to form the weld.

A preferred bumper configuration is a curved-sided box structure comprising a channel sectioned facing component bridged by a backing component welded down each side. These welds are preferably formed simultaneously, and thus a particularly preferred method is one in which the facing component is formed with a configuration comprising a channel shaped transverse section having side walls extending from a curved based portion to provide a convex exposed surface and a concave concealed surface, the backing component being mounted in the channel to form a bridge between the side walls and to present a surface along each edge of the backing component to an adjacent longitudinal strip of the side wall surfaces, each pair of adjacent surfaces having a porous heating element therebetween and their surfaces being softened sufficiently to be capable of fusing together, the two side walls then being biased inwards towards the backing component until the softened materials have fused together through their respective heating elements, the biasing pressure being applied by a pair of relatively movable rigid members placed against the exposed surfaces of the side walls and pressed inwards towards each other after the surfaces have been softened.

The channel section may be assymetric, as one side forms the top of the bumper in use and the other side forms the lower part of the bumper. The channel may also be irregular to provide flats, indents or flanges, for example, for securing other features thereto, and for providing a suitable surface configuration to which the backing component can be welded.

According to a second aspect of the invention we provide an apparatus for forming a car bumper from a preformed thermoplastic facing component having a channel shaped transverse section with side walls extending from a curved base portion, and a preformed thermoplastic backing component preformed to fit between the side walls remote from the base, by welding the backing component to the side walls using sacrificial heating elements, the apparatus comprising a first jig for holding the facing component, the first jig having relatively moveable rigid members positioned to support the side walls along their weld line, and pressure means for pressing the two rigid members toward each other, a second jig for holding the backing component between the side walls in line with the two rigid members, and means for heating sacrificial heating elements located between the backing component and the side walls.

The pressure means is preferably a pneumatically or hydraulically inflatable tube mounted between one of the moveable rigid members and a fixed wall of the first jig, such that on inflation the moveable member becomes forced away from the wall by the tube towards any facing component held within the jig. A second inflatable tube is preferably mounted behind the other rigid member, but generally this is not essential providing the second jig allows a small amount of movement of the backing member to occur, to enable the pressure to be transmitted by the backing members to the other weld.

Our preferred form of sacrificial heating element is one formed from electrical resistance wire, e.g. by weaving or braiding, preferably in combination with thermoplastic filaments compatible with the bumper materials. Our preferred means for heating the elements is thus a source of electrical current and means for connecting it to the resistance wire of the heating element.

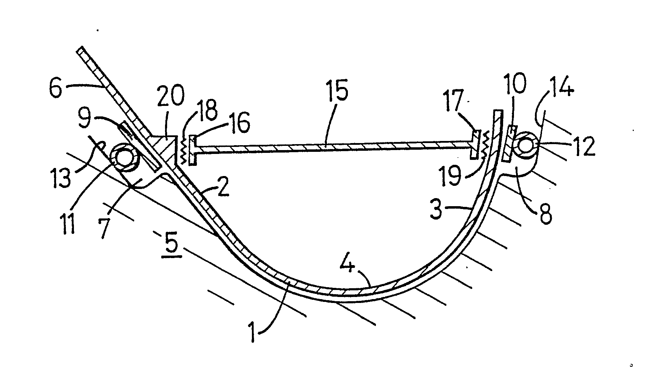

The invention is illustrated by reference to a specific embodiment shown in the accompanying drawing, which is a simplified section through the two components resting in a first jig. This is shown diagrammatically and slightly exploded to illustrate how they fit together.

In the drawing a facing component 1, has a channel shaped transverse section with side walls 2, 3 extending from a curved base portion 4. The facing component is supported in a jig 5 with its exposed surface 6 adjacent to the jig. Opposite the part of the side walls in which the welds are to be made, the jig has two recesses 7, 8, one on either side. Mounted in each of the recesses is a movable rigid strip 9, 10 of glass filled resin, with an inflatable tube 11, 12 lying between the rigid strip and the wall 13, 14 of the recess.

Supported by a second jig (not shown) is a backing component 15 with longitudinally extending edges whose outer surfaces 16, 17 lie adjacent to the inner surface of the side walls 2, 3, with porous heating elements 18, 19 therebetween. The inner side wall surface is formed with a shoulder 20 to assist in forming the weld.

When preparing to make the weld, the two jigs are set up such that with the tubes deflated, there is a gap between the edges of the backing component and the side walls of the facing component, which is just about the thickness of the heating element, so that with the element in place, preferably held with a few spot welds, there is little if any pressure against the heating element. A current is passed through the heating element to soften the adjacent surfaces, but as the inward pressure is little or nothing, there is no significant inward movement of the rigid members 10. When the surfaces are sufficiently soft to be capable of fusing, the tubes 11, 12 are inflated to press the moveable members inwards. The heating is then switched off and the material is cooled (generally simply by ceasing to provide further heat) while the higher pressure is maintained. When the material is sufficiently hard, this pressure is released and the welded article removed from the jigs.

## Claims

1. A method of welding together components of mutually compatible thermoplastic material, comprising the steps of:

a) supporting the components with a pair of respective surface portions to be welded together juxtaposed to each other, but between the surface portions of each pair, a gap just wide enough to accommodate a sacrificial heating element;

b) inserting a said element in said gap;

c) heating the said surface portions by means of the sacrificial heating element, until they are soft enough for the materials to be fusible together under pressure, any force associated with supporting the components being insufficient throughout steps (a) to (c) to cause any substantial relative movement of the components;

(d) then, and only then, applying pressure to urge the said surface portions into close contact so that they become fused; and subsequently,

e) cooling to solidify the fused material to form a welded joint.

2. A method according to Claim 1, in which the pressure in step (d) is applied by inflating a resilient tubular element.

3. A method according to Claim 1 or Claim 2, wherein the pressure in step (d) is applied by forcing a substantially rigid movable member into contact with a surface of one of the components so as to apply a force to both components across said pair of surface portions over substantially the whole length of the latter.

4. A method according to Claim 3 when dependent on Claim 2, wherein the tubular element is inflated in step (d) so as to move the movable element, located between the tubular element and the said component, into contact with the latter.

5. A method according to any one of the preceding claims, for welding together an outer component and an inner component, wherein step (a) comprises supporting the inner component within the outer component, the said pressure in step (d) being applied externally to the outer component to urge its softened surface portion inwardly into intimate contact with the corresponding surface portion of the inner component.

6. A method according to Claim 5 for simultaneously forming a plurality of welded seams between the inner and outer components with the seams lying in different planes, wherein step (a) includes leaving a said gap between the surface portions of each said pair, in step (b) a sacrificial heating element is inserted in each gap, in step (c) the said surface portions are all heated simultaneously, and in step (d) external pressure is applied to the outer component across at least one said pair of surface portions so as to be transmitted across all of the said surface portions simultaneously.

7. A method according to Claim 6, wherein the outer and inner components are respectively a channel-shaped facing member and a relatively rigid internal backing member, having the function of a strut across the facing member, the facing member being supported in step (a) by first support means and the backing member by second support means.

8. A method according to claim 7, wherein in step (d) the pressure is applied adjacent to only one said pair of surface portions and is transmitted by the backing member to the said surface portions of the other side of the latter.

9. A method according to any one of the preceding claims, wherein the sacrificial heating element is electrical, step (c) comprising passing an electric current through the element.

10. A method according to Claim 9, wherein the electric heating element comprises electric heat resistance wire in combination with filaments of thermoplastic material compatible with the materials of the components, step (d) including allowing the thermoplastic material of the heating element to become fused with the said surface portions of the components.

11. Apparatus for welding together an outer component and an inner component of mutually compatible thermoplastic material, comprising support means (5) for supporting the inner component within the outer component with a pair of respective surface portions to be welded together juxtaposed to each other and with a gap, just wide enough to accommodate a sacrificial heating element (18,19) between the surface portions of said pair, the support means (5) carrying pressure means (9,11,10,12) for applying external pressure to the outer component, independently of the supporting function of the support means (5), whereby to urge said surface portions together.